# EUROPEAN PATENT SPECIFICATION

(11) **EP 2 110 546 B1**
(45) Date of publication and mention of the grant of the patent: **23.04.2014**
(21) Application number: 09004227.6
(22) Date of filing: 25.03.2009
(51) Int. Cl.: F03B 13/00, F03B 3/04, F03B 13/06, F03B 13/08

(54) **Axial fluid-dynamic machine for generating electric energy**
Axiale Strömungsdynamikmaschine zum Erzeugen von Strom
Machine à fluide-dynamique axial pour générer une énergie électrique

(30) Priority: 14.04.2008 IT TO20080290
(43) Date of publication of application: 21.10.2009
(73) Proprietor: Zilio Energia S.r.l., 15040 Castelletto Monferrato (AL) (IT)
(72) Inventor: Zilio, Pier Luigi, 15040 Castelletto Monferrato (AL) (IT)
(74) Representative: Garavelli, Paolo

(56) References cited:
- DE-A1- 3 324 326
- FR-A- 651 546
- GB-A- 186 310
- US-B1- 6 267 551

## Description

The present invention refers to an axial fluid-dynamic machine, in particular a turbine, suitable for generating electric energy that exploits as input energy the dynamic flow of the liquid (water) flowing therethrough.

Pressurised hydraulic ducts in which water flows are well known and widespread as solution for generating electric energy. A commonly adopted solution in hydraulic ducts is pumping water upwards, namely towards upwards storage basins, from which water is then again made flow downwards, namely downstream, generating energy by exploiting the height difference. In order to disinfect with chlorine water present in such basins, through an operation called "chlorination", since such basins are not commonly reached by electric supply mains, it is necessary that an operator periodically goes in the place where they are located (usually placed in difficult positions, such as high mountains), and pours pre-established amounts of disinfecting chlorine. This operation is obviously long, costly and labour-consuming.

The above mentioned problem is only one of the many that can occur when it is necessary to produce electric energy for an even not great use in places where it is very difficult, if not impossible, to make an electric line arrive.

DE-A1-3324326 discloses a fluid-dynamic machine according to the preamble of Claim 1.

Object of the present invention is solving the above prior art problems, by providing an axial fluid-dynamic machine for generating electric energy that can be easily installed next to pressurised ducts in which a fluid (water) flows and that allows deriving from part of the flowing water the necessary force to produce the required energy, usually, but not limited to, with not high values.

Another object of the present invention is providing an axial fluid-dynamic machine as mentioned above that can be simply and economically build, can be easily controlled on site or remotely and can be easily installed even in small or difficult places.

The above and other objects and advantages of the invention, as will appear from the following description, are obtained with an axial fluid-dynamic machine as described in claim 1.

Preferred embodiments and non-trivial variations of the present invention are the subject matter of the dependent claims.

The present invention will be better described by some preferred embodiments thereof, provided as a non-limiting example, with reference to the enclosed drawings, in which:
- FIG. 1 shows a perspective view of a first preferred embodiment of the axial fluid-dynamic machine of the present invention;
- FIG. 2 is a schematic view of an example of application of the axial fluid-dynamic machine of the invention;
- FIG. 3 shows an exploded perspective view of a second preferred embodiment of the internal parts of the axial fluid-dynamic machine of the present invention;
- FIG. 4 is a partially-broken view similar to Fig. 3; and
- FIG. 5 is a side view of the embodiment of Fig. 3.

It will be immediately obvious that many variations and modifications (for example related to shape, sizes, arrangements and parts with equivalent functionality) can be made to what is described, without departing from the scope of the invention as described in the enclosed claims.

With reference to the Figures, preferred, but not limiting, embodiments of the axial fluid-dynamic machine 1 of the invention are described.

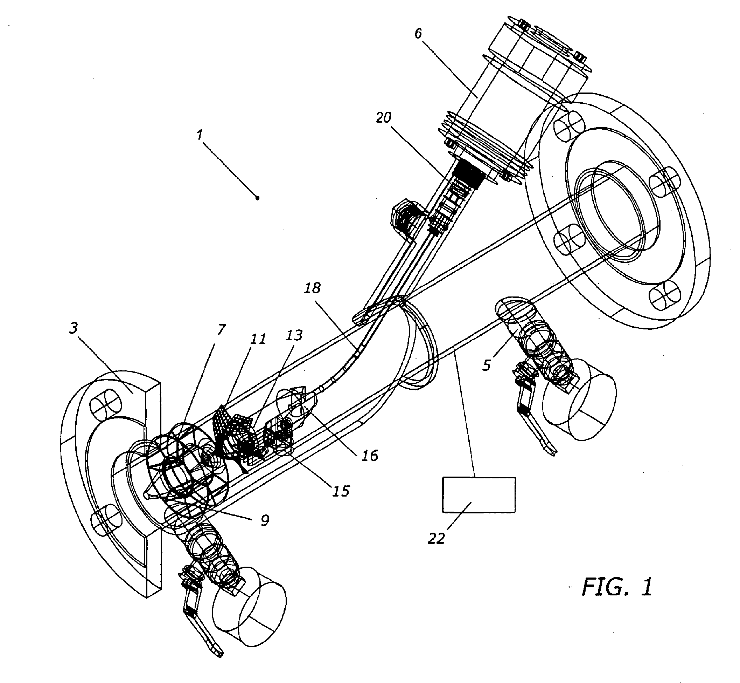

Fig. 1 shows a first preferred embodiment of the machine 1 of the invention; in such embodiment, the machine 1 (described in particular as a turbine) is substantially composed of:
- a fixed body 3, preferably UNI flanged and made of metal, in a single body, on which some stand-outs 5 are obtained, made by welding pipe hubs welded at one end and threaded at the other end. Such stand-outs 5 are used for installing suitable manometers (not shown) for measuring the input and output pressure and for connecting a dynamo - alternator 6 to which end users will be in turn connected;
- a distributor 7 with suitable attachment cone 9 to direct the water flow directly onto the blades 11 of the rotary turbine 13;
- a bulb-type turbine 13 assembled onto a fixed support 15, integral with the rigid structure of the body 3, that rotates onto the support 15, preferably made of bronze and stainless steel ball bearings. The turbine 13 is followed by a section bar 16 made of Teflon that operates as diffuser for liquid going out of the turbine 13. The approximate rated torque of the hydraulic machine is 3Nm;
- a flexible shaft 18, preferably made of flexible steel, whose diameter is equal to 3.6 mm, directly connected to the turbine 13 axle for transmitting movement from turbine 13 to dynamo - alternator 6, enclosed inside an aluminium enclosure to avoid that, when rotating, this latter one is braked by the relative water movement;
- a connecting sleeve 20 between the flexible shaft 18 terminal and the dynamo - alternator 6 shaft, whose connection is performed by tightening with stud bolt with socket head screw through a warning-hole obtained in the structure-supporting stand-out;
- a dynamo alternator 6 (with the following preferable operating data: electric rated power 40VA, 3000 revolutions/min, maximum output voltage 25Vdc), equipped with a screwing point for tachometric detection;
- at least one command and control electric panel 22, substantially composed of at least one voltage regulator, at least one 12V 18Ah battery, protecting devices, at least one 12-230V 50Hz inverter (in case of required AC output).

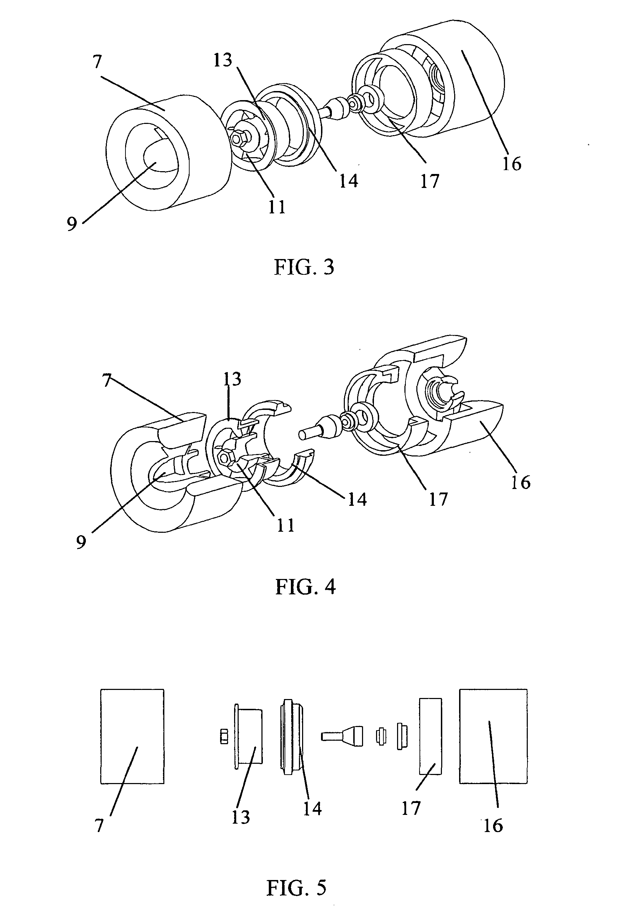

Fig. 3 to 5 show a second preferred embodiment of the axial fluid-dynamic machine (1) of the present invention. With the arrangement of this second embodiment, it is possible to do without the stand-outs 5 and the fixed support 15 of the turbine 13.

In fact, the second embodiment provide for a bush 14 (preferably made of graphite) with cooperates with a thrust bearing 17 (also preferably made of graphite) in order to allow the turbine 13 to rotate and simultaneously support the thrust of flowing water.

For the correct operation of the turbine within its stable curve, the system is required to provide a minimum continuous flow-rate equal to 10 m3/h and a maximum operating pressure equal to 10 bar; the supply pipe, preferably but not limited to, should have a section lower than 2" and not higher than 3,5".

The turbine 13, installed in line with the system, moves as operating hydraulic machine transmitting motion, through the flexible shaft 18, directly to the dynamo - alternator 6 shaft: this latter one generates an electric energy that can be transformed into current that can be used for supplying the electric load. Water flows through the system with a neglectable pressure drop (lower than 0.1 5bar) going on flowing till it arrives at its destination.

The system can be installed in all sectors in which there is a request for the presence of electric energy, without electric supply from public mains, but where there are pressurised hydraulic ducts and with water flow.

The following devices are then pointed out as main electric users:
- batching pumps;
- remote control systems, alarm managing systems, remote commands, remote signalling systems;
- low-consumption electric lams (max power 18 W) with continuous operation or incandescent lamps (max power 60 W) with non-continuous operation;
- plants for managing alarms and high power signals (max power 100 W) with non-continuous operation (max 2 h).

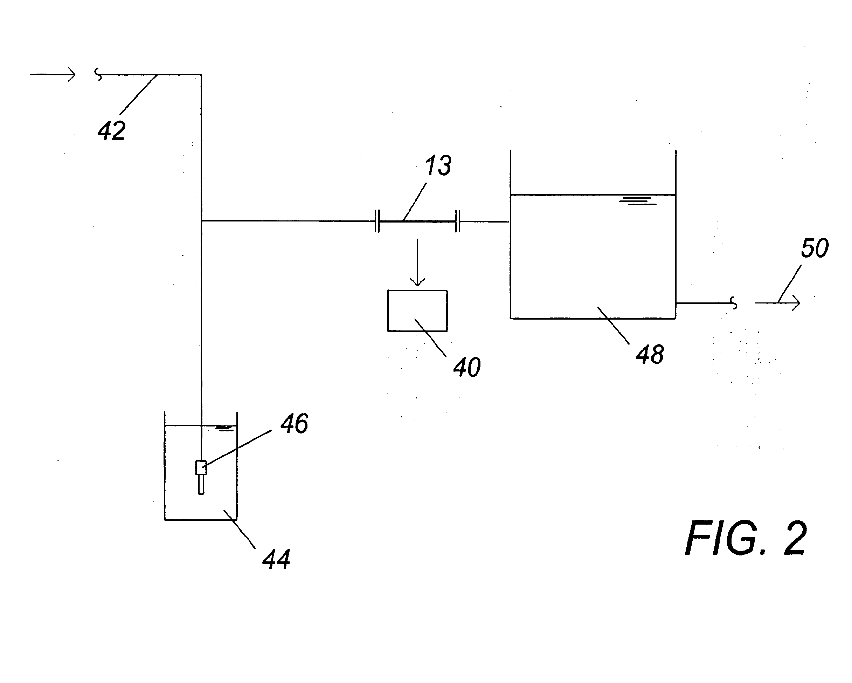

Figure 2 shows an application as batching pump 40: it can be well seen that such pump 40 is supplied by the turbine 13 placed in a suitable position on channels 42, that, in the chlorination application, provide for an exit in a trap 44 with submersed pump 46, and that end in the real tank 48 to be chlorinated. Water, suitably chlorinated by the batching pump 40 (without requiring the presence of a human operator any more) can finally be sent to end users 50.

## Claims

1. Axial fluid-dynamic machine (1) adapted to produce electric energy through an operating coupling with pressurised ducts in which fluid flows, the electric energy produced by said machine (1) being suitable to be used for local applications next to said ducts to which it is not possible to bring electric energy through supply mains, said fluid-dynamic machine (1) comprising:
- a fixed body (3);
- at least one distributor (7) with an attachment cone (9) contained into said fixed body (3) and adapted to direct a water flow directly onto blades (11) of a rotary turbine (13) ;
- at least one rotary turbine (13) contained into said fixed body (3) and followed by at least one section bar (16) operating as diffuser for liquid going out of the turbine (13);
**characterised in that** said fluid-dynamic machine (1) further comprises:
- at least one dynamo-alternator (6) equipped with a screwing point for tachometric detection;
- at least one stand-out (5) connected to said fixed body (3) on an external surface thereof, said at least one stand-out (5) being adapted to install manometers therein for measuring an input and an output pressure of said fluid, and being adapted to connect thereto said dynamo - alternator (6) for producing electric energy;
- at least one flexible shaft (18) directly connected to an axle of the turbine (13) for transmitting movement from the turbine (13) to the dynamo - alternator (6) placed outside said fixed body (1);
- at least one connecting sleeve (20) between the flexible shaft (18) terminal and the dynamo - alternator (6) shaft; and
- at least one command and control electric panel (22).

2. Axial fluid-dynamic machine (1) according to claim 1, **characterised in that** said stand-out (5) is obtained by welding pipe hubs welded at one end and threaded at the other end.

3. Axial fluid-dynamic machine (1) according to claim 1, **characterised in that** said turbine (13) is assembled on a fixed support (15), integral with the rigid structure of the fixed body (3), that rotates on the support (15).

4. Axial fluid-dynamic machine (1) according to claim 1, **characterised in that** said rotary turbine (13) is supported by a bush (14) and a thrust bearing (17) operatively coupled to said section bar (16) operating as diffuser for liquid going out of the turbine (13), said bush (14) and said thrust bearing (17) being adapted to allow said turbine (13) to rotate and simultaneously to support a thrust from flowing water.

5. Axial fluid-dynamic machine (1) according to claim 4, **characterised in that** said bush (14) and said thrust bearing (17) are made of graphite.

6. Axial fluid-dynamic machine (1) according to claim 1, **characterised in that** said dynamo - alternator (6) is enclosed inside an aluminium enclosure to avoid that, when rotating, this latter one is braked by the relative water movement.

7. Axial fluid-dynamic machine (1) according to claim 1, **characterised in that** the connection of the connecting sleeve (20) between flexible shaft (18) terminal and dynamo - alternator (6) shaft is performed by tightening with stud bolt with socket head screw through a warning-hole obtained on the structure-supporting stand-out.

8. Axial fluid-dynamic machine (1) according to claim 1, **characterised in that** said command and control electric panel (22) is composed of at least one voltage regulator, at least one battery, protecting devices, and, in case or required AC output, of at least one inverter.

## Patentansprüche

1. Axiale Strömungsmaschine (1), die dazu dient, elektrische Energie durch die Verbindung von Druckleitungen zu erzeugen, durch die ein Fluid strömt, die von der genannten Maschine (1) erzeugte Energie ist für lokale Anwendungen in der Nähe der genannten Leitungen verwendbar, daher ist es nicht möglich, elektrische Energie durch die Versorgungsnetze zu leiten, die genannte axiale Strömungsmaschine (1) schließt folgendes ein:
- einen festen Körper (3);
- mindestens einen Verteiler (7) mit einem Anschlusskegel (9), der im genannten festen Körper (3) enthalten ist und dazu dient, den Wasserfluss direkt auf die Schaufeln (11) einer Drehturbine (13) zu leiten;
- mindestens eine Drehturbine (13), die im genannten festen Körper (3) enthalten ist und von mindestens einem Profil (16) als Diffusor für das aus der Turbine (13) austretende Fluid gefolgt wird;
und ist **dadurch gekennzeichnet, dass** die genannte Strömungsmaschine (1) außerdem folgendes einschließt:
- mindestens einen Dynamo-Altemator (6), der mit einem Einschraubpunkt für den Drehzahlanschlag ausgestattet ist;
- mindestens eine Unterbrechung (5), die mit dem genannten festen Körper (3) an einer Außenfläche verbunden ist, die genannte mindestens eine Unterbrechung (5) dient zur Installation der Manometer in ihrem Inneren für die Messung des Ein- und Ausgangsdrucks des genannten Fluids und dazu, sich mit dem genannten Dynamo-Altemator (6) für die Stromerzeugung zu verbinden;
- mindestens eine biegsame Welle (18), die direkt mit einer Achse der Turbine (13) für die Übertragung der Bewegung von der Turbine (13) zum Dynamo-Alternator (6) verbunden ist, der außen am genannten festen Körper (1) angebracht ist;
- mindestens ein Verbindungsrohr (20) zwischen dem Endstück der biegsamen Welle (18) und der Welle des Dynamo-Alternators (6); und
- mindestens eine elektrische Schalt- und Kontrolltafel (22).

2. Axiale Strömungsmaschine (1) gemäß Patentanspruch 1, die **dadurch gekennzeichnet ist, dass** die genannte Unterbrechung (5) durch die Schweißung von Rohrnaben erhalten wird, die an einem Ende geschweißt sind und am anderen mit einem Gewinde versehen sind.

3. Axiale Strömungsmaschine (1) gemäß Patentanspruch 1, die **dadurch gekennzeichnet ist, dass** die genannte Turbine (13) an einer festen Halterung (15) montiert ist, die ein Stück mit der festen Struktur des Körpers (3) bildet, die sich an der Halterung (15) dreht.

4. Axiale Strömungsmaschine (1) gemäß Patentanspruch 1, die **dadurch gekennzeichnet ist, dass** die genannte Drehturbine (13) durch eine Buchse (14) und ein Drucklager (17) gestützt wird, das operativ mit dem genannten Profil (16) als Diffusor für das Fluid verbunden ist, das aus der Turbine (13) austritt, die genannte Buchse (14) und das genannte Drucklager (17) dienen dazu, der genannten Turbine (13) zu ermöglichen, sich zu drehen und gleichzeitig den Druck des durchströmenden Wassers auszuhalten.

5. Axiale Strömungsmaschine (1) gemäß Patentanspruch 4, die **dadurch gekennzeichnet ist, dass** die genannte Buchse (14) und das genannte Drucklager (17) aus Graphit hergestellt werden.

6. Axiale Strömungsmaschine (1) gemäß Patentanspruch 1, die **dadurch gekennzeichnet ist, dass** der genannte Dynamo-Altemator (6) in einem Aluminiumfutter eingeschlossen ist, um zu vermeiden, dass letzterer bei der Drehung durch die entsprechende Bewegung des Wassers gebremst wird.

7. Axiale Strömungsmaschine (1) gemäß Patentanspruch 1, die **dadurch gekennzeichnet ist, dass** die Verbindung des Verbindungsrohres (20) zwischen dem Endstück der biegsamen Welle (18) und der Welle des Dynamo-Alternators (6) durch den Anzug mit einer Inbusstiftschraube durch ein Schauloch ausgeführt wird, das an der Unterbrechung zur Halterung der Struktur erhalten wird.

8. Axiale Strömungsmaschine (1) gemäß Patentanspruch 1, die **dadurch gekennzeichnet ist, dass** die genannte elektrische Schalt- und Kontrolltafel (22) aus mindestens einem Spannungsregler, mindestens einer Batterie, Schutzvorrichtungen und im Falle eines in Wechselstrom erforderlichen Ausgangs mit mindestens einem Inverter besteht.

## Revendications

1. Machine fluidodynamique axiale (1) apte à produire de l'énergie électrique par accouplement opératif avec des conduites en pression dans lesquelles coule du fluide, l'énergie électrique produite par ladite machine (1) étant utilisable pour des applications locales à proximité desdites conduites par lesquelles il n'est pas possible de porter de l'énergie électrique à travers des réseaux d'alimentation, ladite machine fluidodynamique axiale (1) comprenant:
- un corps fixe (3);
- au moins un distributeur (7) avec un cône de fixation (9) contenu dans ledit corps fixe (3) et apte à diriger un flux d'eau directement sur palette (11) d'une turbine tournante (13);
- au moins une turbine tournante (13) contenue dans ledit corps fixe (3) et suivie par au moins un profilé (16) opératif comme diffuseur pour le liquide en sortie de la turbine (13);
**caractérisée par le fait que** ladite machine fluidodynamique (1) comprend en outre:
- au moins une dynamo-alternateur (6) munie de point de vissage pour rencontre tachymétrique ;
- au moins un détachement (5) raccordé audit corps fixe (3) sur une surface externe, ledit détachement (5) étant apte à l'installation de manomètres dans celui-ci pour la mesure d'une pression en entrée et en sortie dudit fluide, et étant apte à se connecter à ladite dynamo - alternateur (6) pour la production d'énergie électrique;
- au moins un arbre flexible (18) raccordé directement à un axe de la turbine (13) pour la transmission du mouvement de la turbine (13) à la dynamo alternateur (6) placée à l'extérieur dudit corps fixe (1);
- au moins un conduit de raccordement (20) entre le terminal de l'arbre flexible (18) et l'arbre de la dynamo - alternateur (6); et
- au moins un tableau électrique (22) de commande et contrôle.

2. Machine fluidodynamique axiale (1) selon la revendication 1, **caractérisée par le fait que** ledit détachement (5) est obtenu au moyen de soudure de moyens de tube soudés à une extrémité et filetés de l'autre.

3. Machine fluidodynamique axiale (1) selon la revendication 1, **caractérisée par le fait que** ladite turbine (13) est montée sur un support fixe (15), solidaire à la structure rigide du corps (3), qui tourne sur le support (15).

4. Machine fluidodynamique axiale (1) selon la revendication 1, **caractérisée par le fait que** ladite turbine tournante (13) est soutenue par une boite chaude (14) et un roulement de poussée (17) accouplé en mode opératif audit profilé (16) opératif comme diffuseur pour le liquide qui sort de la turbine (13), ladite boite chaude (14) et ledit roulement de poussée (17) étant aptes à permettre à ladite turbine (13) de tourner et simultanément supporter une poussée de l'eau qui coule.

5. Machine fluidodynamique axiale (1) selon la revendication 4, **caractérisée par le fait que** ladite boite chaude (14) et ledit roulement de poussée (17) sont faits de graphite.

6. Machine fluidodynamique axiale (1) selon la revendication 1, **caractérisée par le fait que** ladite dynamo - alternateur (6) est renfermée à l'intérieur de un gaine en aluminium pour éviter que, pendant la rotation, cette dernière soit freinée par le mouvement relatif de l'eau.

7. Machine fluidodynamique axiale (1) selon la revendication 1, **caractérisée par le fait que** le raccordement du conduit de raccordement (20) entre le terminal de l'arbre flexible (18) et l'arbre de la dynamo - alternateur (6) est effectué au moyen de serrage avec goujon à traverse trou-témoin obtenu sur le détachement de support de la structure.

8. Machine fluidodynamique axiale (1) selon la revendication 1, **caractérisée par le fait que** ledit tableau électrique (22) de commande et de contrôle est constitué d'au moins un régulateur de tension, au moins une batterie, des dispositifs de protection, et, en cas de sortie demandée en courant alternatif, d'au moins un inverter.
